# EUROPEAN PATENT APPLICATION

(11) **EP 4 050 361 A1**
(43) Date of publication of application: **31.08.2022**
(21) Application number: 19949703.3
(22) Date of filing: 25.10.2019
(51) Int. Cl.: G01S 5/08

(54) **FACILITY EQUIPMENT CONTROL SYSTEM, INFORMATION TERMINAL, LOCATION IDENTIFICATION METHOD, AND PROGRAM**

(71) Applicant: MITSUBISHI ELECTRIC CORPORATION, Chiyoda-ku Tokyo 100-8310 (JP)
(72) Inventor: KUROIWA Takeru, Tokyo 100-8310 (JP)
(74) Representative: Studio Torta S.p.A.
(86) International application number: PCT/JP2019/041997
(87) International publication number: WO 2021/079509

(57) **Abstract**

A storage (23) stores floor information including a restriction position that a person is unable to access within a floor. A wireless signal receiver (21) receives a wireless signal transmitted by a transmission terminal (10). A distance and angle estimator (22) estimates a distance to the transmission terminal (10) and an angle of arrival of the wireless signal based on the wireless signal received by the wireless signal receiver (21). A location identifier (24) identifies a current location of a user within the floor based on the floor information stored in the storage (23). A communicator (25) transmits, to a control device, location information including the current location identified by the location identifier (24) for the control device to control an air conditioner.

## Description

### Technical Field

The present disclosure relates to a facility equipment control system, an information terminal, a location identification method, and a program.

### Background Art

A system for controlling facility equipment, such as an air conditioner, lighting equipment, and the like, is installed heretofore in a building such as an office building. For example, if a current location of a user on a floor can be identified with high accuracy, such a system can provide the facility equipment with control more suitable to the user.

For example, Patent Literature 1 discloses an invention relating to a location estimation device for improving estimation accuracy of a location where an unknown radio station exists. The invention of Patent Literature 1 improves the accuracy of the location estimation based on radio field intensity by mapping correction values for the radio field intensity to a closed space. Thus, use of such invention of Patent Literature 1 can be considered as identifying a current location of a user on a floor.

### Citation List

### Patent Literature

Patent Literature 1: International Publication No. WO2019/082252

### Summary of Invention

### Technical Problem

However, since the estimation of the location is only based on the radio field intensity, the invention of Patent Literature 1 may have identified a location on the floor, such as a pillar, a wall, or the like, that a person is unable to enter. Also, in an example of Patent Literature 1, although workload necessary for the mapping is expected not to be heavy since the closed space is a relatively small space such as a space in a vehicle, the workload is expected to be heavy, for example, in a case where the closed space is a large space, such as an office floor, with characteristics of the closed space differing depending on the property.

Thus, a technique of identifying the current location of the user on the floor with high accuracy is demanded.

In view of the above circumstances, an objective of the present disclosure is to provide a facility equipment control system, an information terminal, a location identification method, and a program capable of identifying a current location of a user on a floor with high accuracy.

### Solution to Problem

To achieve the above described objective, a facility equipment control system according to the present disclosure includes a transmission terminal disposed within a floor and configured to transmit a wireless signal, a control device to control facility equipment installed within the floor, and an information terminal portable by a user. The information terminal includes storage means for storing floor information that includes a restriction position that a person is unable to access within the floor, wireless signal reception means for receiving the wireless signal transmitted by the transmission terminal, estimation means for estimating, based on the wireless signal received by the wireless signal reception means, a distance between the information terminal and the transmission terminal and an angle of arrival of the wireless signal, identification means for identifying a current location of the user within the floor based on the distance and the angle of arrival estimated by the estimation means, and transmission means for transmitting, to the control device, location information that includes the current location identified by the identification means, The control device includes location information reception means for receiving the location information transmitted by the information terminal, and control means for controlling the facility equipment based on the location information received by the location information reception means.

### Advantageous Effects of Invention

In the facility equipment control system according to the present disclosure, the information terminal stores, in the storage means, the floor information including the restriction position that the person is unable to access within the floor. In this information terminal, the estimation means estimates the distance between the information terminal and the transmission terminal and the angle of arrival of the wireless signal based on the wireless signal, and the identification means identifies the current location of the user within the floor based on the estimated distance and the estimated angle of arrival and the floor information stored in the storage means, and the transmission means transmits to a control device the location information including the identified current location. In the control device, the location information reception means receives the location information transmitted by the information terminal and the control means controls the facility equipment based on the location information. As a result, the current location of the user within the floor can be identified with higher accuracy.

### Brief Description of Drawings

FIG. 1 is a schematic diagram illustrating an example of an overall configuration of an air-conditioning system according to Embodiment 1 of the present disclosure;
FIG. 2 is a block diagram illustrating an example of a configuration of a transmission terminal and an information terminal according to Embodiment 1 of the present disclosure;
FIG. 3 is a schematic diagram for detailed description of the specific situation within a floor;
FIG. 4 is a schematic diagram for description of a positional relationship between the transmission terminal and the information terminal;
FIG. 5 is a block diagram illustrating an example of a configuration of a control device according to Embodiment 1 of the present disclosure;
FIG. 6 is a flowchart for description of a location identification process and an air-conditioning control process according to Embodiment 1 of the present disclosure;
FIG. 7 is a schematic diagram illustrating an example of an overall configuration of an air-conditioning system according to Embodiment 2 of the present disclosure;
FIG. 8 is a block diagram illustrating an example of a configuration of an information terminal according to Embodiment 2 of the present disclosure; and
FIG. 9 is a flowchart for description of an air-conditioning control system according to Embodiment 2 of the present disclosure.

### Description of Embodiments

Embodiments of the present disclosure are hereinafter described in detail with reference to the drawings. Throughout the drawings, like or corresponding parts are designated by the same reference numerals. In the following description, an air-conditioning system that controls an air conditioner is used as an example of a facility equipment control system that controls facility equipment, but as described below, the present disclosure can be applied similarly to a system for controlling other facility equipment. In other words, the embodiments described below are for explanatory purposes but not for restricting the scope of the present disclosure. Thus, one of the ordinary skill in the art can adopt an embodiment obtained by replacing each or all of the elements with equivalents to the elements, and such an embodiment can be included in the scope of the present disclosure.

### Embodiment 1

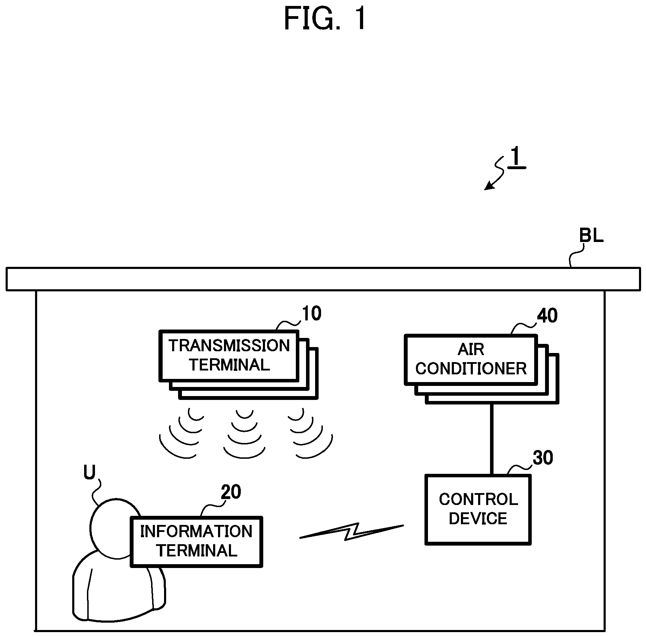

FIG. 1 is a schematic diagram illustrating an example of an overall configuration of an air-conditioning system 1 according to Embodiment 1 of the present disclosure. This air-conditioning system 1 is a system that conditions air in a building BL, that is, within a floor, and includes a plurality of transmission terminals 10, an information terminal 20, a control device 30, and a plurality of air conditioners 40. The information terminal 20 and the control device 30 are communicatively connected, for example, through wireless communication with each other. The control device 30 and the air conditioners 40 are communicatively connective, for example, through wired communication.

The transmission terminals 10 are spaced apart from one another on the ceiling of the building BL, and transmit wireless signals. That is, the transmission terminals 10 are fixed on the ceiling within the floor and transmit the wireless signals therefrom within the floor. Although a case where the transmission terminals 10 are disposed on the ceiling is described as an example, the installation location of the transmission terminals 10 is not limited to the ceiling but may be a wall, a pillar, or the like.

Examples of the information terminal 20 include a smartphone and a tablet, and the information terminal 20 is carried by a user U who can enter a space in the floor. Although the details are described later, while the user U enters and stays within the floor, the information terminal 20 identifies the current location of the user U and transmits the location information including the current location to the control device 30.

The control device 30 is, for example, a centralized controller and controls the air conditioners 40. Although the details are described later, upon receiving the location information from the information terminals 20, the control device 30 controls the air conditioners 40 in accordance with the location information.

The air conditioner 40 is, for example, an indoor unit disposed in the building BL and is connected through piping to an outdoor unit disposed outside the building BL. As an example, the air conditioner 40 includes an expansion valve and a heat exchanger, and performs conditioning of air within the floor by evaporating or condensing, in the heat exchange, coolant sent through the piping from the outdoor unit. The air conditioner 40 is communicatively connected to the control device 30 and performs conditioning of air in response to commands sent by the control device 30. As described later, the air conditioner 40 may be capable of communicating with the information terminal 20 through wireless communication.

The transmission terminal 10, the information terminal 20, and the control device 30 are described below in detail with reference to the drawings.

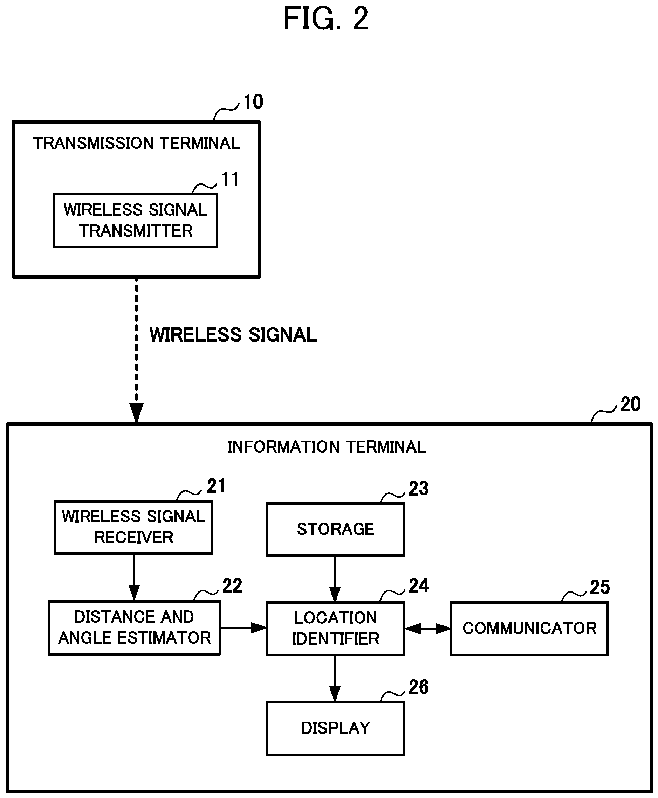

First, the details of the transmission terminal 10 and the information terminal 20 are described with reference to FIG. 2. FIG. 2 is a block diagram illustrating an example of a configuration of the transmission terminal 10 and the information terminal 20 according to Embodiment 1 of the present disclosure. As illustrated, firstly, the transmission terminal 10 includes a wireless signal transmitter 11.

The wireless signal transmitter 11 transmits a wireless signal compliant with wireless standards, such as Bluetooth (registered trademark) Low Energy (BLE), Wi-Fi, or the like. This wireless signal includes a terminal identification (ID) for identifying the transmission terminal 10. That is, the wireless signal transmitter 11 transmits within the floor the wireless signal including the terminal ID. The wireless signal also further includes information of an angle of departure (AOD). For example, the wireless signal further including the information of the angle of departure may be transmitted within the floor by transmitting the wireless signal using an array antenna having an array of antenna elements in the wireless signal transmitter 11.

Next, as illustrated in FIG, 2, the information terminal 20 includes a wireless signal receiver 21 that is an example of wireless signal reception means, a distance and angle estimator 22 that is an example of estimation means, a storage 23 that is an example of storage means, a location identifier 24 that is an example of identification means, a communicator 25 that is an example of transmission means, and a display 26 that is an example of display means. The distance and angle estimator 22 and the location identifier 24 are implemented, for example, by a central processing unit (CPU) using a random access memory (RAM) as working memory and executing a program stored in a read-only memory (ROM) as appropriate.

The wireless signal receiver 21 receives wireless signals transmitted by the transmission terminals 10. Then the wireless signal receiver 21 detects a radio field intensity of each wireless signal and a phase difference between the wireless signals, and associate the radio field intensity and the phrase difference with the terminal ID. The wireless signal receiver 21 may receive the wireless signals transmitted by the transmission terminal 10, for example, using the array antenna. In this case, the wireless signal receiver 21 can detect the phase difference of the wireless signals.

The distance and angle estimator 22 estimates a distance between the information terminal 20 and the transmission terminal 10 in accordance with the radio field intensity detected by the wireless signal receiver 21. The radio field intensity is, for example, inversely proportional to the square of the distance between the information terminal and the transmission terminal 10. That is, a shorter distance between the information terminal and the transmission terminal 10 increases the radio field intensity, and a longer distance between the information terminal and the transmission terminal 10 decreases the radio field intensity. Using such a characteristic, the distance and angle estimator 22 estimates the distance between the information terminal and the transmission terminal 10 in accordance with the radio field intensity.

The distance and angle estimator 22 estimates an angle with the information terminal 20 and the transmission terminal 10 in accordance with the phase difference detected by the wireless signal receiver 21. For example, for the wireless signals received by the wireless signal receiver 21, the distance and angle estimator 22 obtains an installation position of the corresponding transmission terminal 10 by using the terminal ID and referring to a below- described storage 23. The distance and angle estimator 22 estimates, as an example, an angle by which the wireless signal arrives, that is, an angle of arrival (AOA), from the distance and the phase difference between the transmission terminals 10 that are determined from each installation position. The angle to be estimated is assumed to be, as an example, an angle based on a horizontal direction, that is, a direction along a ceiling surface, but as another direction, a vertical direction, that is, a direction of gravitational force can be used as a reference. In a case where the above-described wireless signal receiver 21 receives the wireless signals by the array antenna, the distance and angle estimator 22 may estimate the angle by which the wireless signal arrives, in accordance with the phase difference of the wireless signal by the array antenna. As described above, in a case where the angle of departure information is included in the wireless signal, the distance and angle estimator 22 may, from the angle of departure information, estimate the angle by which the wireless signal arrives.

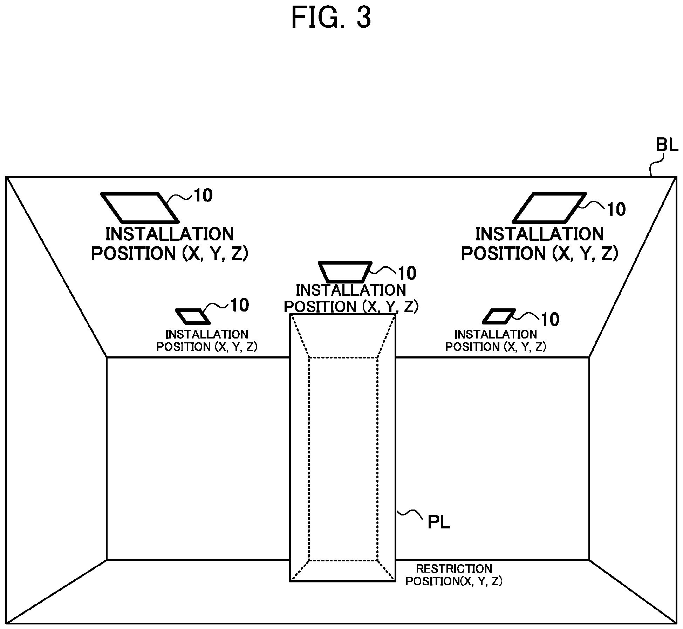

The storage 23 stores, for example, floor information. This floor information includes the installation position of each transmission terminal 10 and a restriction position that a person is unable to access within the floor. As an example, in a case of the building BL as illustrated in FIG. 3, the transmission terminals 10 are disposed on the ceiling within the floor and the space in the floor has a pillar PL. In the case of this example, the installation position of each transmission terminal 10 and the restriction position of the pillar PL are actually measured, and the floor information generated based on these positions is stored in the storage 23 beforehand. The installation position is associated with the terminal ID of the transmission terminal 10. The restriction position is not limited to that of the pillar PL, and as another example, includes a wall-based restriction position. Such storage of the floor information beforehand is an example, and the floor information may be entered by the user U as appropriate. For example, upon input of the installation position and the restriction position from a non-illustrated inputter in the information terminal 20, these positions may be stored in the storage 23 as the floor information.

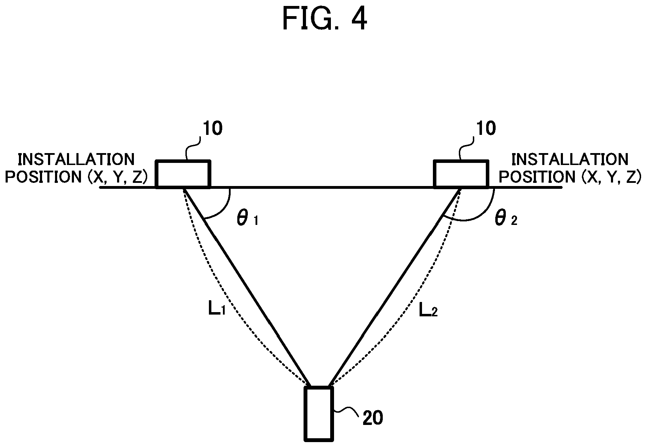

Again with reference to FIG. 2, the location identifier 24 identifies the current location of the user U within the floor, that is, the current location of the information terminal 20 within the floor using the distance and the angle estimated by the distance and angle estimator 22 and the floor information stored in the storage 23. For example, as illustrated in FIG. 4, first, the location identifier 24 estimates, using the installation positions of the transmission terminals 10 as starting points, an estimation position of the information terminal 20 from relationships between the estimated distances L1 and L2 and the estimated angles θ1 and θ2. Then, when the estimation position overlaps the restriction position included in the floor information, the location identifier 24 shifts the estimation position from the restriction position and identifies as the current location a location obtained by the shifting. For example, the location identifier 24 shifts the estimation position from the restriction position so as to be close to the last identified current location, and identifies as the current location a position obtained by the shifting. This way of shifting the estimation position from the restriction position is just an example, and may be another way. For example, the location identifier 24 may shift the estimation position from the restriction position so as to be closer to a center portion in the floor. When the estimation position does not overlap the restriction position, the location identifier 24 identifies the estimation position as the current location as is.

Again with reference to FIG. 2, the communicator 25 performs wireless communication with the control device 30. For example, the communicator 25 transmits to the control device 30 the location information including the current location identified by the location identifier 24. The location information may include an identification code for identifying the information terminal 20 or the user U in addition to the current location.

The display 26 displays information including the current location identified by the location identifier 24. For example, the display 26 displays guide information obtained by superimposing an icon indicating the current location on a floor plan.

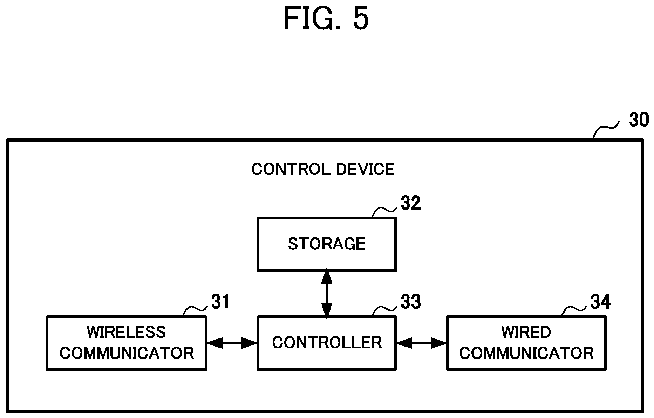

Next, the control device 30 is described in detail with reference to FIG. 5. FIG. 5 is a block diagram illustrating an example of a configuration of the control device 30 according to Embodiment 1 of the present disclosure. As illustrated, the control device 30 includes a wireless communicator 31 that is an example of location information reception means, a storage 32, a controller 33 that is an example of control means, and a wired communicator 34.

The wireless communicator 31 performs wireless communication with the information terminal 20. For example, the wireless communicator 31 receives the location information transmitted by the information terminal 20.

The storage 32 stores a variety of information necessary for control of the air conditioner 40. For example, the storage 32 stores information, such as an indoor temperature within the floor, an outside temperature, air conditioner 40 operation modes, such as cooling, heating, dehumidification, and ventilation, and a setting temperature, an air volume, and an air blowing direction of the air conditioner 40.

The controller 33 includes, as an example, a CPU, a ROM, a RAM, and the like, and controls operation of the entire control device 30. For example, upon the wireless communicator 31 receiving the location information transmitted by the information terminal 20, the controller 33 determines content of control on the air conditioners 40 based on an algorithm using as an input the current location included in the location information. As an example, the controller 33 determines the content of the control that separates the air blowing direction from the current location so that the air from the air conditioner 40 is not blown to the user U. In addition to the current location, the controller 33 may determine the content of the control on the air conditioner 40 based on an algorithm using as an input the information stored in the storage 32. For example, in a case where, in summer or winter, a difference in temperatures between the indoor temperature within the floor and the setting temperature of the air conditioner 40 is great, the controller 33 may determine the content of the control to change the air blowing direction to the current location by increasing the air volume so that the air from the air conditioner 40 is blown against the user U. In addition to the above, profile information of each user U may be additionally stored in the storage 32, and the controller 33 may determine the content of the control in accordance with sex, age, or the like of the user U identified by the identification code included in the location information.

The wired communicator 34 performs communication with the air conditioners 40. For example, the wired communicator 34 transmits to air conditioner 40 a command based on the content of the control determined by the controller 33. Also, upon reception of the state information transmitted by the air conditioner 40, the wired communicator 34 may, for example, supply the state information to the controller 33 to cause the controller 33 to update the information in the storage 32.

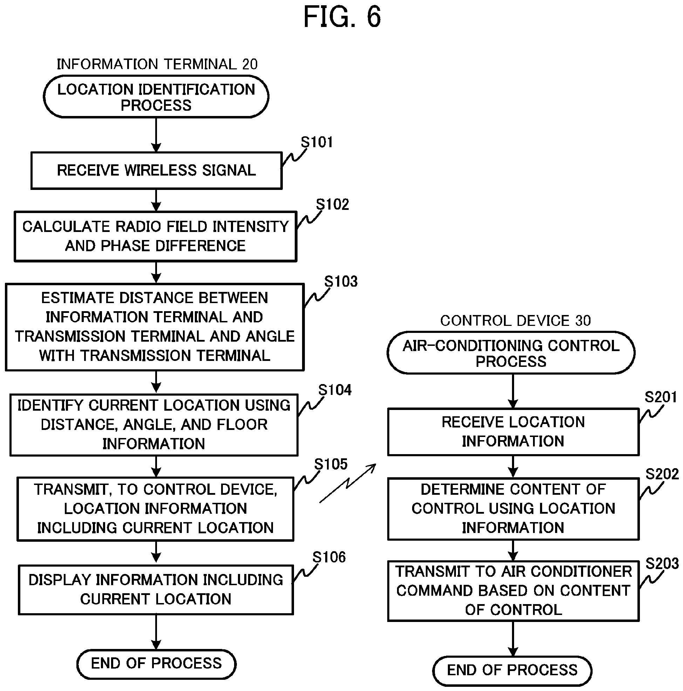

Operation of the air-conditioning system 1 having such a configuration is described below with reference to FIG. 6. FIG. 6 is a flowchart illustrating an example of a location identification process and an air-conditioning control process according to Embodiment 1 of the present disclosure. This location identification process is executed in the information terminal 20 and the air-conditioning control process is executed in the control device 30.

First, the information terminal 20 receives wireless signals (step S101). That is, the wireless signal receiver 21 receives the wireless signals transmitted from the plurality of transmission terminals 10 disposed on the ceiling within the floor. That is, this step S101 is an example of a wireless signal reception step.

The information terminal 20 calculates a radio field intensity and a phase difference (step S102). That is, the wireless signal receiver 21 detects the radio field intensity of the wireless signals received in the step S101 and phase difference between the wireless signals.

The information terminal 20 estimates the distance between the information terminal 20 and the transmission terminal 10 and the angle with the transmission terminal 10 (step S103). That is, the distance and angle estimator 22 estimates the distance between the information terminal 20 and the transmission terminal 10 in accordance with the radio field intensity detected in the above-described step S102. The distance and angle estimator 22 also estimates the angle with the information terminal 20 and the transmission terminal 10 in accordance with the phase difference detected in step S102. That is, this step S103 is an example of an estimation step.

The information terminal 20 identifies the current location using the distance, the angle, and the floor information (step S104). That is, the location identifier 24 identifies the current location of the user U within the floor, that is, the current location of the information terminal 20 using the distance and the angle estimated in the above-described step S103 and the floor information stored in the storage 23. That is, this step S104 is an example of an identification step.

For example, as illustrated in FIG. 4 described above, the location identifier 24 firstly estimates, using the installation positions of the transmission terminals 10 as starting points, an estimation position of the information terminal 20 from relationships between the estimated distances L1 and L2 and the estimated angles θ1 and θ2. Then, when the estimation position overlaps the restriction position included in the floor information, the location identifier 24 shifts the estimation position from the restriction position and identifies as the current location a location obtained by the shifting. For example, the location identifier 24 shifts the estimation position from the restriction position so as to be close to the last identified current location, and identifies as the current location a position obtained by the shifting.

The information terminal 20 transmits to the control device 30 the location information including the current location (step S105). That is, the communicator 25 transmits to the control device 30 the location information including the current location identified in the above-described step S104. The location information may include, in addition to the current location, an identification code for identifying the information terminal 20 or the user U.

The information terminal 20 displays information including the current location (step S 106). That is, the display 26 displays information including the current location identified in the above-described step S104. For example, the display 26 displays guide information obtained by superimposing an icon indicating the current location on a floor plan.

The control device 30 receives the location information (step S201). That is, the wireless communicator 31 receives the location information transmitted by the information terminal 20.

The control device 30 determines content of control using the location information (step S202). That is, the controller 33 determines the content of the control of the air conditioner 40 based on an algorithm using as an input the current location included in the location information received in the above-described step S201. As an example, the controller 33 determines the content of the control that causes separation of the air blowing direction from the current location so that the air from the air conditioner 40 is not blown against the user U.

The control device 30 transmits to the air conditioner 40 a command based on the content of the control (step S203). That is, the wired communicator 34 transmits to the air conditioner 40 the command based on the content of the control determined in the above-described step S202.

By such a location identification process, a pillar, a wall, or the like that a person is unable to enter is not identified as the current location, and a position obtained by shifting as appropriate is identified as the current location. Thus, the current location of the user U within the floor can be identified with high accuracy. Also, determination of the content of the control based on the location information by the air-conditioning control process can provide the air conditioner 40 with control more suitable to the user U.

This results in higher accuracy of identification of the current location of the user U within the floor.

### Embodiment 2

Although Embodiment 1 describes a case where the information terminal 20 that identifies the current location controls the air conditioner 40 through the control device 30, the air conditioner 40 may be controlled directly by the information terminal 20. The direct control of the air conditioner 40 by the information terminal 20 is described below in Embodiment 2.

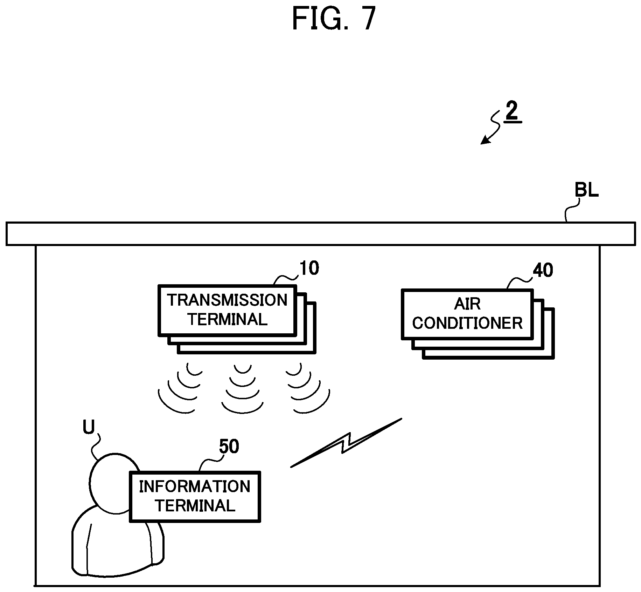

FIG. 7 is a schematic diagram illustrating an example of an overall configuration of an air-conditioning system 2 according to Embodiment 2 of the present disclosure. This air-conditioning system 2 is a system that conditions air in a building BL, that is, within a floor, and includes a plurality of transmission terminals 10, an information terminal 50, and a plurality of air conditioners 40. The information terminal 20 and the air conditioners 40 are communicatively connected, for example, through wireless communication with each other.

The transmission terminals 10 are similar to those in Embodiment 1 above. That is, the transmission terminals 10 are fixed on the ceiling within the floor and transmit wireless signals within the floor.

The air conditioners 40 are also similar to those in Embodiment 1 above. The air conditioners are capable of communicating with the information terminal 50.

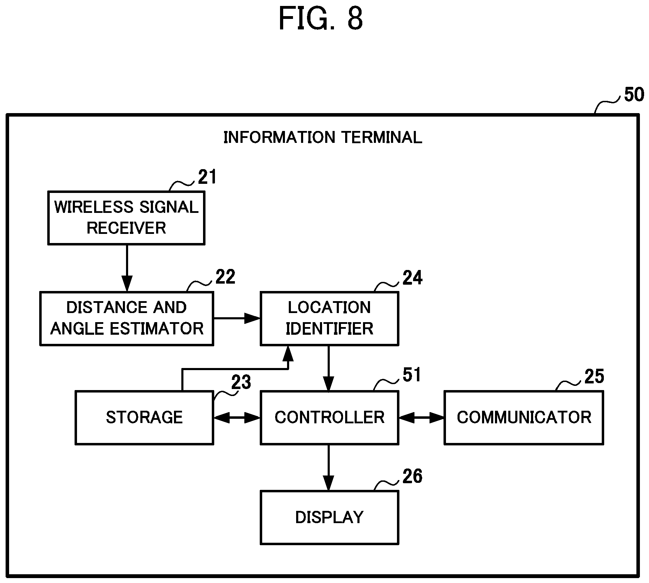

Examples of the information terminal 50 include a smartphone, a tablet, and the information terminal 20, and the information terminal 50 is carried by the user U who can enter the space in the floor. Details of this information terminal 50 are described with reference to FIG. 8. FIG. 8 is a block diagram illustrating an example of a configuration of the information terminal 50 according to Embodiment 2 of the present disclosure. As illustrated, the information terminal 50 includes a wireless signal receiver 21 that is an example of wireless signal reception means, a distance and angle estimator 22 that is an example of estimation means, a storage 23 that is an example of storage means, a location identifier 24 that is an example of identification means, a controller 51 that is an example of control means, a communicator 25 that is an example of transmission means, and a display 26 that is an example of display means. The wireless signal receiver 21, the distance and angle estimator 22, the storage 23, the location identifier 24, the controller 51, the communicator 25, and the display 26 are similar to those in Embodiment 1 above. That is, the information terminal 50 has a configuration including the controller 51 additionally in the information terminal 20 according to Embodiment 1.

The controller 51 determines content of control of the air conditioners 40 using the current location identified by the location identifier 24. For example, the controller 51 determines the content of the control of the air conditioner 40 based on an algorithm using as an input the current location. As an example, the controller 51 determines the content of the control that separates the air blowing direction from the current location so that the air from the air conditioner 40 is not blown against the user U. In addition to the current location, the controller 51 may determine the content of the control on the air conditioner 40 based on an algorithm using, as an input, state information transmitted from the air conditioner 40. For example, in a case where, in summer or winter, a difference in temperatures between an indoor temperature within the floor and the setting temperature of the air conditioner 40 is great, the controller 51 may determine the content of the control to change the air blowing direction to the current location by increasing the air volume so that the air from the air conditioner 40 is blown to the user U. In addition to the above, profile information of each user U may be additionally stored in the storage 23, and the controller 51 may determine the content of the control in accordance with sex, age, or the like of the user U.

Then the communicator 25 transmits to the air conditioner 40 through wireless communication a command based on the content of the control determined by the controller 51. The communicator 25 may receive the state information transmitted from the air conditioner 40.

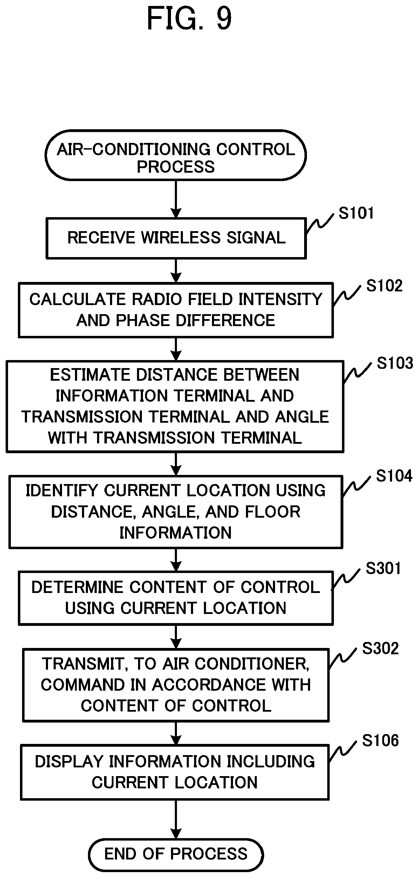

Operation of the air-conditioning system 2 having such a configuration is described below with reference to FIG. 9. FIG. 9 is a flowchart illustrating an example of an air-conditioning control process according to Embodiment 2 of the present disclosure. This air-conditioning control process is executed by the information terminal 50. Since steps S101 to S104 and S106 in FIG. 9 are similar to those of the location identification process of Embodiment 1 above, these steps are described briefly.

First, the information terminal 50 receives wireless signal (step S101), and then calculates a radio field intensity and a phase difference (step S102).

The information terminal 50 estimates a distance between the information terminal 50 and the transmission terminal 10 and an angle with the information terminal 50 and the transmission terminal 10 (step S103), and identify the current location using the distance, the angle, and the floor information (step S104).

The information terminal 50 determines content of control using the current location (step S301). That is, the controller 51 determines the content of the control of the air conditioner 40 based on an algorithm using as an input the current location identified in the above-described step S104. As an example, the controller 51 determines the content of the control that separates the air blowing direction from the current location so that the air from the air conditioner 40 is not blown against the user U.

The information terminal 50 transmits to the air conditioner 40 a command based on the content of the control (step S302). That is, the communicator 25 transmits to the air conditioner 40 by wireless communication the command based on the content of the control determined in the above-described step S301.

The information terminal 50 displays information including the current location (step S106). In addition to the current location, the display 26 may display the content of the control determined in the above-described step S301.

By such an air-conditioning control process, a pillar, a wall, or the like that a person is unable to enter is not identified as the current location, and a position obtained by shifting as appropriate is identified as the current location. Determination of the content of the control based on the identified current location can provide the air conditioner 40 with control more suitable for the user U.

This results in higher accuracy of identification of the current location of the user U within the floor.

### Other Embodiments

Although the air-conditioning systems 1 and 2 that control air conditioners 40 are described in the embodiments above, the present disclosure can be applied similarly to a system for controlling facility equipment other than the air conditioners 40. For example, the present disclosure can also be applied similarly to a lighting system for controlling lighting equipment. As an example, in a lighting system with lighting equipment installed within the floor instead of the air conditioner 40 in FIG. 1 described above, the information terminal 20 transmits to the control device 30 the location information including the identified current location, and the control device 30 can control the lighting equipment to light the current location brightly in accordance with location information. Also, in a lighting system with lighting equipment within the floor instead of the air conditioner 40 in FIG. 7 described above, similarly, the information terminal 50 identifies the current location and can control the lighting equipment directly.

In Embodiments 1 and 2 described above, the program executable by the information terminal 20, 50, and the control device 30 can be stored for distribution in a computer-readable recording medium, such as compact disc read only memory (CD-ROM), a digital versatile disc (DVD), a magneto-optical disc (MO), a universal serial bus (USB) memory, a memory card, or the like. Then installing the program into a dedicated or general-purpose computer also enables the computer to function as the information terminal 20, 50, and the control device 30 in Embodiments 1 and 2 described above.

The above-described program may be stored on a disk device or the like of a server device on a communication network such as the Internet to enable the program to be downloaded to the computer, for example by superimposing the program onto a carrier wave. The above-described functions can also be achieved by starting and executing the program while transferring the program via a communication network. The above-described functions can also be achieved by executing all or a part of the program on the server device and executing the program while the computer sends and receives information relating to the processing via the communication network.

When the above-described functions are, for example, achieved partly by an operating system (OS) and an application program or in cooperation between the OS and the application program, the program other than the OS may be stored on the above recording medium for distribution or may be downloaded to the computer.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present disclosure can be applied with advantage to a facility equipment control system, an information terminal, a location identification method, and a program capable of identifying a current location of a user within a floor with higher accuracy.

### Reference Signs List

- 1,2: Air-conditioning system
- 10: Transmission terminal
- 11: Wireless signal transmitter
- 20, 50: Information terminal
- 21: Wireless signal receiver
- 22: Distance and angle estimator
- 23: Storage
- 24: Location identifier
- 25: Communicator
- 26: Display
- 51: Controller
- 30: Control device
- 31: Wireless communicator
- 32: Storage
- 33: Controller
- 34: Wired communicator
- 40: Air conditioner

## Claims

1. A facility equipment control system, comprising:
a transmission terminal disposed within a floor and configured to transmit a wireless signal;
a control device to control facility equipment installed within the floor; and
an information terminal portable by a user, wherein
the information terminal comprising
storage means for storing floor information that includes a restriction position that a person is unable to access within the floor,
wireless signal reception means for receiving the wireless signal transmitted by the transmission terminal,
estimation means for estimating, based on the wireless signal received by the wireless signal reception means, a distance between the information terminal and the transmission terminal and an angle of arrival of the wireless signal,
identification means for identifying a current location of the user within the floor based on the distance and the angle of arrival estimated by the estimation means, and
transmission means for transmitting, to the control device, location information that includes the current location identified by the identification means; and
the control device comprising
location information reception means for receiving the location information transmitted by the information terminal, and
control means for controlling the facility equipment based on the location information received by the location information reception means.

2. The facility equipment control system according to claim 1, wherein the estimation means estimates the distance based on radio field intensity of the wireless signal and estimates the angle of arrival based on a phase difference between a plurality of the wireless signals.

3. The facility equipment control system according to claim 1 or 2, wherein when an estimation position based on the distance and the angle of arrival estimated by the estimation means overlaps the restriction position included in the floor information, the identification means identifies as the current location a position obtained by shifting the estimation position from the restriction position.

4. The facility equipment control system according to claim 3, wherein the identification means identifies as the current location a position obtained by shifting the estimation position from the restriction position so as to be close to a last identified current location.

5. An information terminal portable by a user, the information terminal comprising:
storage means for storing floor information that includes a restriction position that a person is unable to access within a floor;
wireless signal reception means for receiving a wireless signal transmitted by a transmission terminal disposed within the floor;
estimation means for estimating, based on the wireless signal received by the wireless signal reception means, a distance between the information terminal and the transmission terminal and an angle of arrival of the wireless signal;
identification means for identifying a current location of the user within the floor based on the distance and the angle of arrival estimated by the estimation means and the floor information stored in the storage means; and
control means for controlling facility equipment disposed within the floor based on the current location identified by the identification means.

6. An information terminal portable by a user, the information terminal comprising:
storage means for storing floor information that includes a restriction position that a person is unable to access within a floor;
wireless signal reception means for receiving a wireless signal transmitted by a transmission terminal disposed within the floor;
estimation means for estimating, based on the wireless signal received by the wireless signal reception means, a distance between the information terminal and the transmission terminal and an angle of arrival of the wireless signal;
identification means for identifying a current location of the user within the floor based on the distance and the angle of arrival estimated by the estimation means and the floor information stored in the storage means; and
display means for displaying information including the current location identified by the identification means.

7. The information terminal according to claim 5 or 6, wherein the estimation means estimates the distance based on radio field intensity of the wireless signal and estimates the angle of arrival based on a phase difference between a plurality of the wireless signals.

8. The information terminal according to any one of claims 5 to 7, wherein when an estimation position based on the distance and the angle of arrival estimated by the estimation means overlaps the restriction position included in the floor information, the identification means identifies as the current location a position obtained by shifting the estimation position from the restriction position.

9. The information terminal according to claim 8, wherein the identification means identifies as the current location a position obtained by shifting the estimation position from the restriction position so as to be close to a last identified current location.

10. A location identification method executable by an information terminal portable by a user, the information terminal storing floor information that includes a restriction position that a person is unable to access within a floor, the location identification method comprising:
receiving a wireless signal transmitted by a transmission terminal disposed within the floor;
estimating, based on the wireless signal received in the receiving, a distance between the information terminal and the transmission terminal and an angle of arrival of the wireless signal; and
identifying a current location of the user within the floor based on the distance and the angle of arrival estimated in the estimating and the floor information.

11. A program for causing a computer that is portable by a user and stores floor information including a restriction position that a person is unable to access within a floor to function as:
a wireless signal receiver to receive a wireless signal transmitted by a transmission terminal disposed within the floor;
an estimator to estimate a distance between the computer and the transmission terminal and an angle of arrival of the wireless signal based on the wireless signal received by the wireless signal receiver;
an identifier to identify a current location of the user within the floor based on the distance and the angle of arrival estimated by the estimator; and
a controller to control facility equipment disposed within the floor based on the current location identified by the identifier.
